(19) Europäisches Patentamt
European Patent Office
Office européen des brevets

(11) **EP 2 899 656 A1**

(12) **EUROPEAN PATENT APPLICATION**
published in accordance with Art. 153(4) EPC

(43) Date of publication:
**29.07.2015 Bulletin 2015/31**

(51) Int Cl.:
***G06F 19/00*** (2011.01)

(21) Application number: **13838960.6**

(22) Date of filing: **04.06.2013**

(86) International application number:
**PCT/JP2013/003502**

(87) International publication number:
**WO 2014/045493 (27.03.2014 Gazette 2014/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.09.2012 JP 2012208721**

(71) Applicant: **Sumitomo Heavy Industries, Ltd.**
**Tokyo 141-6025 (JP)**

(72) Inventor: **OHNISHI, Yoshitaka**
**Yokosuka-Shi**
**Kanagawa 237-8555 (JP)**

(74) Representative: **Emde, Eric**
**Wagner & Geyer**
**Gewürzmühlstrasse 5**
**80538 München (DE)**

(54) **ANALYSIS METHOD AND ANALYSIS DEVICE**

(57) An analyzing device 100 analyzes a particle system defined in a virtual system and includes an area determination unit 112 that determines a cross sectional area between two particles included in the particle system independently of positions of other particles, a heat conduction calculation unit 116 that solves a heat conduction equation using the area determined by the area determination unit, a force calculation unit 122 that calculates a force exerted on a particle using a result of calculation by the heat conduction calculation unit 116, a particle state calculation unit 124 that calculates a state of the particle using the force calculated by the force calculation unit 122, and a state update unit 126 that updates a state of the particle using a result of calculation by the particle state calculation unit 124.

FIG.3

EP 2 899 656 A1

**Description**

[TECHNICAL FIELD]

The present invention relates to an analysis technique for analyzing a particle system.

[BACKGROUND ART]

One known method to study phenomena in material science in general based on classical mechanics or quantum mechanics and using a computer is simulation based on Molecular Dynamics Method (hereinafter, MD method), Quantum Molecular Dynamics Method, or Renormalized Molecular Dynamics (hereinafter, RMD method), which is developed from the MD method to handle a macroscale system.

Normally, the MD method and the RMD method are only capable of analyzing heat conduction by lattice vibration (phonons). Therefore, the results of analysis produced by the MD method or the RMD method in metals are often deviated from the reality because free electrons play a great role in heat conduction.

We have proposed one several methods to solve the disadvantage in patent document 1.

[patent document 1] JP2010-170309
[non-patent document 1] John C. Tully, "Dynamics of gas-surface interaction: 3D generalized Langevin model applied to fcc and bcc surface", J. Chem. Phys., 1975, 73

[PROBLEM TO BE SOLVED BY THE INVENTION]

In the method described in patent document 1, parameters of temperature are assigned to particles so that a temperature field is determined by solving a heat conduction equation using Finite Volume Method (FVM). In this case, a cross sectional area needs to be defined between particles. In the method of patent document 1, Voronoi analysis is used to define a cross sectional area.

For example, Voronoi analysis needs to be performed only once if the target of analysis is an elastic member whose shape does not essentially change. However, in the case of targets such as fluid whose shape changes moment by moment, Voronoi analysis needs to be performed in each computational step. Generally, Voronoi analysis generates a computational load proportional to the forth power of the number of particles so that the computation time is dramatically increased with an increase in the number of particles handled.

Examples of the present invention address a need to provide an analysis technology capable of reducing the computational load involved in analyzing a particle system including a plurality of particles.

[MEANS TO SOLVE THE PROBLEM]

An example of the present invention relates to an analyzing method. The analyzing method is for analyzing a particle system defined in a virtual space and includes: determining a cross sectional area between two particles included in the particle system independently of positions of other particles; and updating a state of the particle system by using the determined area.

According to the example, computation load involved in determining an area between two particles included in a particle system is reduced.

Note that any combination of the aforementioned components or any manifestation of the present invention realized by modifications of a method, apparatus, system, storing media, computer program, and so forth, is effective as an example of the present invention.

[ADVANTAGE OF THE PRESENT INVENTION]

According to the examples of the invention, computational load involved in analyzing a particle system including a plurality of particles is reduced.

[BRIEF DESCRIPTION OF THE DRAWINGS]

Fig. 1 is a schematic diagram showing a Voronoi face produced when a particle system has an fcc structure;
Fig. 2 is a graph showing an exemplary relationship hypothesized between the cross sectional area between the first particle and the second particle, and the distance between the particles;

Fig. 3 is a block diagram showing the function and configuration of an analyzing device according to an example;

Fig. 4 is a data structure diagram showing an example of a particle data storing unit of Fig. 3;

Fig. 5 is a flowchart showing an example of a series of steps in the analyzing device of Fig. 3;

Fig. 6 is a schematic diagram showing a particle system used in non-stationary analysis as calculation to verify the method; and

Fig. 7 is a graph showing results of calculation using the method according to the first example;

[BEST MODE FOR CARRYING OUT THE INVENTION]

In the following, same reference symbols shown in Figures indicate same or corresponding structures, parts or processes, and redundant descriptions may be omitted.

The analyzing device according to an example describes a target of analysis, using a particle system including a plurality of particles and analyzes the particle system by numerically calculating the motion equation of particles. Continuum approximation is introduced in part in the analysis of a particle system according to the analyzing device. In the process related to continuum approximation, an area between particles is used. In determining an area between particles, the analyzing device does not use an exact method such as Voronoi analysis but uses a simpler method with less computational volume.

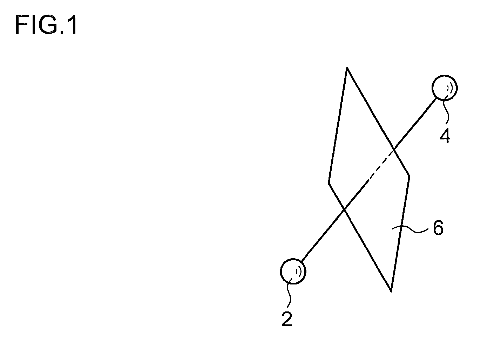

A description will be given of the principle of the example. Where the particles in a particle system are closely packed, the particle system tends to form a face-centered cubic lattice (fcc). Therefore, an fcc structure is taken as a starting point. Fig. 1 is a schematic diagram showing a Voronoi face 6 produced when a particle system has an fcc structure. In the particle system having an fcc structure, the first particle 2 is closest to the second particle 4. A Voronoi division of the particle system using the positions of the particles as kernel points results in the Voronoi face 6 defined between the first particle 2 and the second particle 4. The area $S_0$ of the Voronoi face 6 is given by the following expression 1.

$$S_0 = \frac{2}{\sqrt{3}} r_0^{\;2} \qquad (1)$$

where $r_0$ is the most stable distance between the first particle 2 and the second particle 4. The area $S_0$ of the Voronoi face 6 may be handled as a cross sectional area of the particles.

Given that the first particle 2 is the i-th particle in the particle system and the second particle 4 is the j-th particle in the particle system, it is hypothesized in this example that the cross sectional area $\Delta S_{ij}$ between the first particle 2 and the second particle 4 can be determined sole from the distance $r_{ij}$ between the first particle 2 and the second particle 4 even if the structure of the particle system is different from the fcc structure. In other words, it is hypothesized that the cross sectional area $\Delta S_{ij}$ is independent of the positions of particles other than the first particle 2 and the second particle 4.

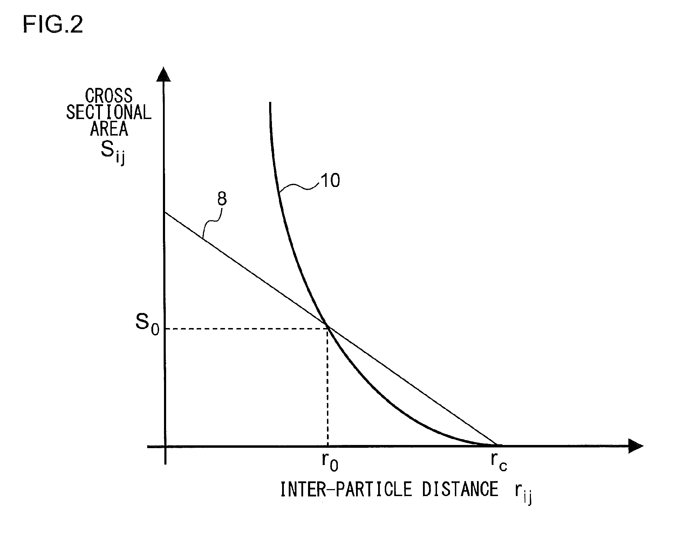

Fig. 2 is a graph showing an exemplary relationship hypothesized between the cross sectional area $\Delta S_{ij}$ between the first particle 2 and the second particle 4, and the distance $r_{ij}$ between the particles. Macroscopically, the cross sectional area $\Delta S_{ij}$ is defined such that the larger the inter-particle distance $r_{ij}$, the smaller $\Delta S_{ij}$. The cross sectional area $\Delta S_{ij}$ may be defined as a linear function 8 of the inter-particle distance $r_{ij}$. Alternatively, the cross sectional area $\Delta S_{ij}$ may be defined as a non-linear function of the inter-particle distance $r_{ij}$ and, more particularly, as a quadratic or higher-dimensional function 10 of $r_{ij}$. Further, the cross sectional area $\Delta S_{ij}$ is defined to be substantially zero when the inter-particle distance $r_{ij}$ is larger than the cut-off distance $r_c$ mentioned later.

Users of the analyzing device according to the example hypothesizes one-to-one relationship as shown in Fig. 2 between the cross sectional area between particles and the inter-particle distance and registers the hypothesized relationship, i.e., the function, in the analyzing device. Where it is necessary to determine the cross sectional area between two particles included in the particle system in the process of numerical calculation, the analyzing device can determine the cross sectional area independently of the positions of other particles by using the registered relationship. The analyzing device uses the determined cross sectional area to continue numerical calculation and update the state of the particle system. This can reduce the computational load involved in deriving the cross sectional area between particles in comparison with the case of deriving the cross sectional area relatively exactly each time there is a need to determine the cross sectional area between two particles. Consequently, the user can obtain the result of analysis quickly.

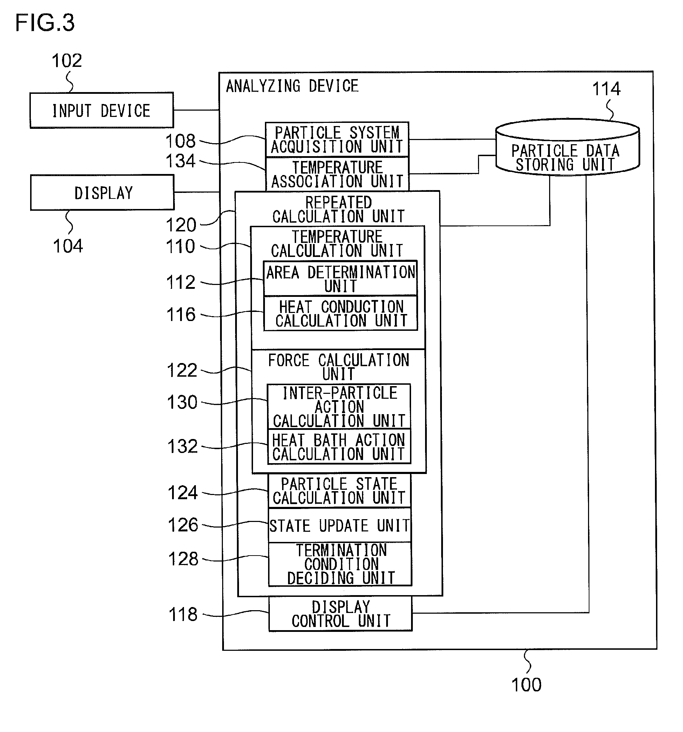

Fig. 3 is a block diagram showing the function and configuration of an analyzing device 100 according to an example. The blocks depicted in the block diagram are implemented in hardware such as devices or mechanical components such as a CPU of a computer, and in software such as a computer program etc. Fig. 1 depicts functional blocks implemented by the cooperation of these elements. Therefore, it will be obvious to those skilled in the art having accessed this specification that the functional blocks may be implemented in a variety of manners by a combination of hardware and software.

In this example, although a case where the particle system is analyzed using the MD method is described, it is obvious to those skilled in the art having the knowledge of the specification that the technical idea of this example can be applied to a case where the particle system is analyzed using the RMD method or to a case where the particle system is analyzed using particle methods such as the Distinct Element Method (DEM), Smoothed Particle Hydrodynamics (SPH), and Moving Particle Semi-implicit (MPS).

The analyzing device 100 is connected to an input device 102 and a display 104. The input device 102 may be a keyboard or a mouse for receiving a user input related to a process performed in the analyzing device 100. The input device 102 may be configured to receive an input from a network such as the Internet or from a recording medium such as a CD, DVD, etc.

The analyzing device 100 includes a particle system acquisition unit 108, a temperature association unit 134, a repeated calculation unit 120, a display control unit 118 and a particle data storing unit 114.

The particle system acquisition unit 108 is operative to acquire data of a particle system. The particle system comprises N (N is a natural number) particles. Those N particles are defined in a one, two or three dimensional virtual space, based on input information acquired from a user through the input device 102. Particles in the particle system may be associated with molecules or atoms.

The particle system acquisition unit 108 is operative to arrange N particles in the virtual space based on the input information and to associate a velocity with each arranged particle. In other words, the particle system acquisition unit 108 assigns an initial position and an initial velocity to the particle system. The particle system acquisition unit 108 is operative to associate a particle ID identifying an arranged particle and a position of the associated particle and a velocity of the arranged particle and to register the associated information to the particle data storing unit 114.

The temperature association unit 134 associates a temperature with a particle in the particle system acquired by the particle system acquisition unit 108 based on input information acquired from a user through the input device 102. Thus, the temperature associated is one of the parameters of a particle. For example, the temperature association unit 134 prompts the user via the display 104 to input an initial value of the temperature of a particle in the particle system. The temperature association unit 134 associates the input initial value of the temperature with the particle ID and register the associated information in the particle data storing unit 114.

The following descriptions assume that all particles of the particle system are homogeneous or equivalent. The following descriptions also assume that a potential energy function is based on pair potential and has the same form regardless of particles. However, it will be obvious to a person skilled in the art who has read this specification that a technical concept according to the present example can be applied to other cases.

The repeated calculation unit 120 is operative to perform numerical operation according to a governing equation that governs a motion of each particle in the particle system, the particle system being represented by data stored by the particle data storing unit 114. In particular, the repeated calculation unit 120 is operative to perform repeated operation according to an equation of motion of a discretized particle. The repeated calculation unit 120 includes a temperature calculation unit 110, a force calculation unit 122, a particle state calculation unit 124, a state update unit 126 and a termination condition deciding unit 128.

The temperature calculation unit 110 calculates the temperature of each particle in the particle system using continuum approximation. In particular, the temperature calculation unit 110 calculates the temperature of the particle based on a discretized heat conduction equation. The temperature calculation unit 110 includes an area determination unit 112 and a heat conduction calculation unit 116.

The area determination unit 112 determines the cross sectional area between two particles included in a particle system independently of the positions of other particles. In particular, the area determination unit 112 refers to data for the particle system stored in the particle data storing unit 114 and calculates the inter-particle distance $r_{ij}$ between the i-th particle and the j-th particle in the particle system ($1 \leq i, j \leq N$). The area determination unit 112 calculates the cross sectional area $\Delta S_{ij}$ between the i-th particle and the j-th particle by substituting the calculated inter-particle distance $r_{ij}$ into the quadratic or higher-dimensional function 10 shown in Fig. 2.

The heat conduction calculation unit 116 calculates the temperature of each particle based on a discretized heat conduction equation. The heat conduction calculation unit 116 may analyze a temperature field using the Finite Volume Method. The steps of deriving a discretized heat conduction equation used in the heat conduction calculation unit 116 will be shown below. The heat conduction equation is given by the following differential equation (expression 2).

$$\rho C_V \frac{\partial T}{\partial t} = \nabla \bullet [K \nabla T] + \dot{Q} \quad (2)$$

where denotes density, Cv denotes specific heat, T denotes temperature, t denotes time, K denotes heat conductivity, and Q denotes amount of heat generated per unit volume.

Taking the volume integral of both sides of expression 1, we obtain

$$\rho \int_V C_V \frac{\partial T}{\partial t} dV = \int_V \nabla \bullet [K\nabla T] dV + \int_V \dot{Q} dV \qquad (3)$$

Applying Gauss's theorem to the first term of expression 2, we obtain

$$\rho \int_V C_V \frac{\partial T}{\partial t} dV = \int_S [K\nabla T] \bullet dS + \int_V \dot{Q} dV \qquad (4)$$

Discretizing expression 4, we obtain

$$\rho C_V \frac{T_i^{n+1} - T_i^n}{\Delta t} \Delta V_i = \sum_j \Delta S_{ij} K_{ij} \frac{T_j^n - T_i^n}{r_{ij}} + \dot{Q} \Delta V_i \qquad (5)$$

where $\Delta V_i$ denotes the volume ($4\pi r_0 3/3$) of a sphere with a radius $r_0$ whose center is located at the position of the i-th particle, $\Delta S_{ij}$ denotes the cross sectional area between the i-th particle and the j-th particle determined by the area determination unit 112, and $r_{ij}$ denotes the distance between the i-th particle and the j-th particle. $T_i^n$ denotes the temperature of the i-th particle in the n-th cycle of the repeated calculation, and $K_{ij}$ denotes the heat conductivity between the i-th particle and the j-th particle. In association with the approximate processing of the cross sectional area performed by the area determination unit 112, the heat conductivity $K_{ij}$ is corrected by the document value. The coefficient used in this correction depends on the state of the structure of the particle system. In most cases, multiplication by a factor of 0.2-2.0 would give results that agree well with the theoretical values.

Expression 5 is a discretized heat conduction equation used in the heat conduction calculation unit 116. Expression 5 allows determining the temperature of the i-th particle in the n+1 calculation, from the cross sectional area determined by the area determination unit 112, the temperature of the particles determined in the n-th cycle of calculation, and the inter-particle distance. The initial temperature associated by the temperature association unit 134 is used as $T_i^0$.

The force calculation unit 122 calculates a force exerted on a particle assumed to be immersed in a heat bath of a temperature calculated by the temperature calculation unit 110. The force calculation unit 122 includes an inter-particle action calculation unit 130 and a heat bath action calculation unit 132.

The inter-particle action calculation unit 130 is operative to refer data of the particle system stored by the particle data storing unit 114 and to calculate a force applied to each particle in the particle system based on particle-particle distances. The inter-particle action calculation unit 130 is operative to, with regard to i-th (i is greater than or equal to 1 and i is less than or equal to N) particle in the particle system, identify particle(s) whose distance from the i-th particle is less than a predetermined cut-off distance $r_c$. Hereinafter, such identified particles are called neighboring particles. The inter-particle action calculation unit 130 assumes that only those particles at a distance from the i-th particle less than the cut-off distance, i.e., neighboring particles, are defined as exerting a force on the i-th particle. The inter-particle action calculation unit 130 neglects the interaction between particles other than the neighboring particles and the i-th particle.

The inter-particle action calculation unit 130 is operative to calculate a force applied to the i-th particle by each neighboring particle based on the potential energy function between the neighboring particle and the i-th particle and the distance between the neighboring particle and the i-th particle. In particular, the inter-particle action calculation unit 130 is operative to calculate the force by obtaining a value of a gradient of the potential energy function at the value of the distance between the neighboring particle and the i-th particle. The inter-particle action calculation unit 130 is operative to sum up the force applied to the i-th particle by a neighboring particle over all neighboring particles in order to calculate the total force applied to the i-th particle. The force calculated by the inter-particle action calculation unit 130 is a force based on the interaction between particles.

Assuming that the i-th particle is immersed in a heat bath of a substantially constant temperature at a temperature $T_i$ calculated by the temperature calculation unit 110, the following two forces are exerted on the i-th particle according to the Langevin method (see non-patent document 1).

(1) Damper force (viscous force)

A damper force is a force exerted by the viscosity of the heat bath on the particle. The damping constant $\alpha$ of

the viscous force is given by the equation below, using a Debye frequency $\omega_D$ and the mass m of the particle.

$$\alpha = \frac{m\pi\omega_D}{6} \qquad (6)$$

The table below lists values of damping constant $\alpha$ of typical metal substances. In this table, particles are associated with atoms.

| Substance | Debye Temperature | Debye Frequency $\omega_D$ [1/s] | Atomic weight | Mass m [kg] | Damping constant $\alpha$ [kg/s] |
|---|---|---|---|---|---|
| Al | 428 | 5.60E+13 | 26.98 | 4.48173E-26 | 1.31E-12 |
| Ti | 420 | 5.50E+13 | 47.9 | 7.95681E-26 | 2.29E-12 |
| Cr | 630 | 8.25E+13 | 52.01 | 8.63953E-26 | 3.73E-12 |
| Fe | 470 | 6.15E+13 | 55.85 | 9.27741E-26 | 2.99E-12 |
| Ni | 450 | 5.89E+13 | 58.71 | 9.75249E-26 | 3.01E-12 |
| Cu | 343 | 4.49E+13 | 63.54 | 1.05548E-25 | 2.48E-12 |
| Zn | 327 | 4.28E+13 | 65.38 | 1.08605E-25 | 2.43E-12 |
| Mo | 450 | 5.89E+13 | 95.95 | 1.5938.5E-25 | 4.92E-12 |
| Ag | 225 | 2.95E+13 | 107.88 | 1.79203E-25 | 2.76E-12 |
| W | 400 | 5.24E+13 | 183.86 | 3.05415E-25 | 8.37E-12 |
| Pt | 240 | 3.14E+13 | 195.09 | 3.2407E-25 | 5.33E-12 |
| Au | 165 | 2.16E+13 | 197 | 3.27243E-25 | 3.70E-12 |

As shown in the table, the damping constant $\alpha$ is on the order of $1.0\times10^{-12}$ (kg/s) in case particles are associated with metal atoms. The Debye frequency $\omega_D$ depends on the mass of the particle. Therefore, if the mass of the particle is $\beta$ times the mass of the atom, the damping constant $\alpha$ will be $\beta^{0.5}$ times the original. For example, if particles that have the property of iron and that have a mass 100 times that of iron atoms are used, the damping constant $\alpha$ will be $2.99\times10^{-11}$ (kg/s).

(2) Random force

A random force corresponds to a force produced by collision of particles in the heat bath. The random force has a standard deviation $\sigma$ given by the expression below.

$$\sigma = \sqrt{\frac{2\alpha KT_i}{\Delta t}} \qquad (7)$$

The heat bath action calculation unit 132 calculates the viscous force and the random force exerted on the i-th ($1\leq i\leq N$) particle in the particle system in accordance with expressions 6 and 7. The heat bath action calculation unit 132 calculates the total force exerted on the i-th particle by adding the viscous force and the random force calculated as being exerted on the i-th particle to the force exerted on i-th particle based on the interaction between particles. The total force $F_i$ exerted on the i-th particle is given by expression 8 below.

$$\vec{F}_i = -\sum_{i\neq j}\left\{\frac{\partial\phi_{ij}(r_{ij})}{\partial r}\right\}\frac{\vec{r}_{ij}}{|r_{ij}|} - \alpha\vec{V}_i + \vec{F}_{random} \qquad (8)$$

where $\phi_{ij}$ denotes the potential energy function between the i-th particle and the j-th particle, $v_i$ denotes the velocity of the i-th particle, and $F_{random}$ denotes the random force having a standard deviation σ. The arrow over a symbol indicates a vector quantity.

The particle state calculation unit 124 refers to data for the particle system stored in the particle data storing unit 114 and calculates at least one of the position and the velocity of the particles in the particle system by applying the total force calculated by the heat bath action calculation unit 132 to the discretized motion equation of particles. In this example, the particle state calculation unit 124 calculates both the position and the velocity of the particles.

The particle state calculation unit 124 calculates the velocity of the particles using according to the discretized motion equation of particles that includes the total force calculated by the heat bath action calculation unit 132. The particle state calculation unit 124 calculates the velocity of the i-th particle in the particle system by substituting the total force calculated by the heat bath action calculation unit 132 as being exerted on the i-th particle, into the motion equation of particles discretized according to a predetermined numerical analysis method such as the leap-frog method or the Euler's method and by using a predetermined infinitesmal time interval Δt. In this calculation, the velocity of the particle calculated in the previous cycle of repeated calculation is used.

The particle state calculation unit 124 is operative to calculate the position of a particle based on the calculated velocity of the particle. The particle state calculation unit 124 is operative to calculate the position of the i-th particle of the particle system by applying the calculated velocity of the i-th particle to an equation of relationship between the position and the velocity of the i-th particle, the equation being discretized based on a certain numerical analysis method and the equation being discretized using the ticks of time □t. This calculation uses positions of the particle obtained in the previous cycle of the repeated operation.

The state update unit 126 updates the state of each particle in the particle system based on the result of calculation by the particle state calculation unit 124. The state update unit 126 is operative to update each of the position and the velocity of each particle in the particle system stored by the particle data storing unit 114 with the position and the velocity calculated by the particle state calculation unit 124.

The termination condition deciding unit 128 is operative to decide whether the repeated operation in the repeated calculation unit 120 should be terminated or not. The termination conditions with which the repeated operation should be terminated may include the condition that the number of operations in the repeated operation reaches a predetermined number, the condition that an instruction for termination is received from outside and the condition that the particle system reaches a steady state. The termination condition deciding unit 128 is operative to terminate the repeated operation in the repeated calculation unit 120 if the termination condition is met. The termination condition deciding unit 128 is operative to return the process to the temperature calculation unit 110 if the termination condition is not met. Then, the temperature calculation unit 110 is operative to again calculate the temperature with position of particles updated by the state update unit 126.

The display control unit 118 is operative to cause the display 104 to display the time evolution of the particle system or the state of the particle system at a certain time based on the position, velocity and temperature of each particle of the particle system, the particle system being represented by data stored by the particle data storing unit 114. This display may be performed in a form of still image or moving image.

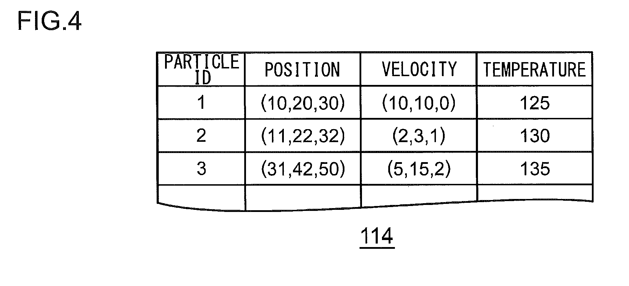

Figure 4 is a data structure diagram showing an example of a particle data storing unit 114. The particle data storing unit 114 stores the particle ID, the position of the particle, the velocity of the particle and the temperature of the particle.

In the above-described example, an example of the storing unit is a hard disk or a memory. It should be understood by a person skilled in the art who has read this specification that it is possible to realize each unit, based on descriptions in this specification, by a CPU (not shown), a module of installed application program, a module of system program or a memory temporarily storing contents of data that has been read out from a hard disk.

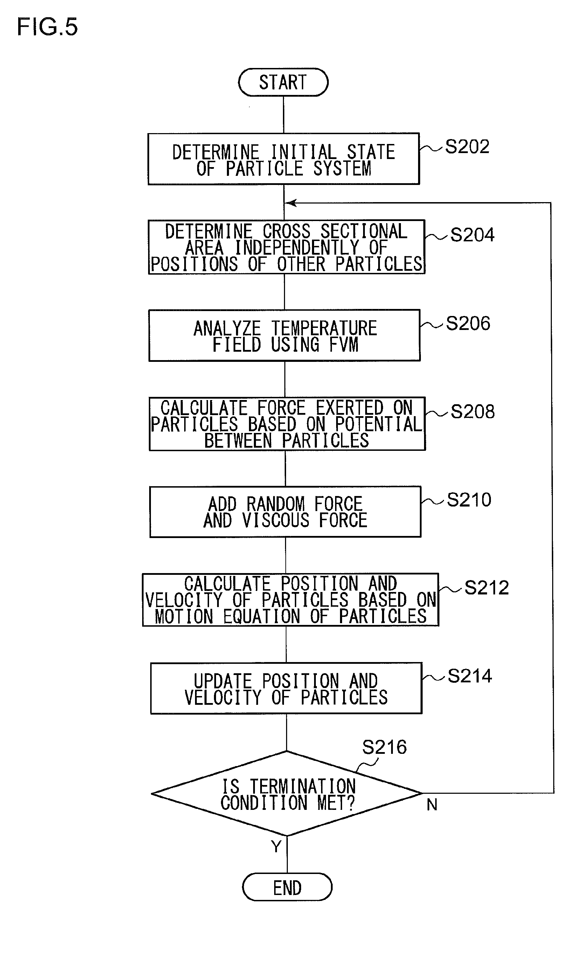

A description will now be given of the operation of the analyzing device 100 having the configuration described above. Fig. 5 is a flowchart showing an example of a series of steps in the analyzing device 100. The analyzing device 100 determines the initial state of the particle system, i.e., the initial position, the initial velocity, and the initial temperature of the particles (S202). The analyzing device determines the cross sectional area between particles independently of the positions of other particles, based on a pre-registered one-to-one relationship between the cross sectional area between particles and the inter-particle distance (S204). The analyzing device 100 uses FVM to analyze the temperature field (S206) and updates the temperature of the particles. The analyzing device 100 calculates the force exerted on each particle based on the potential energy function between particles (S208). The analyzing device 100 adds the viscous force and the random force to the force calculated in step S208 (S210). The analyzing device 100 calculates the velocity and the position of the particles according to the motion equation of particles including the force calculated in step S210 (S212). The analyzing device 100 updates the position and the velocity of the particles stored in the particle data storing unit 114 with the position and the velocity calculated (S214). The analyzing device 100 determines whether a termination condition is met (S216). If the termination condition is not met (N in S216), the process is returned to step S204. If the termination condition is met (Y in S216), the process is terminated.

According to the analyzing device 100 of the example, the cross sectional area $\Delta S_{ij}$ between two particles used in solving the discretized heat conduction equation is determined based on the distance $r_{ij}$ between the two particles independently of the positions of other particles. Therefore, the computational load is significantly reduced as compared to the case of determining the cross sectional area using a more exact method such as Voronoi analysis.

Generally, the more remote the structure of a particle system from the fcc structure, the larger the computational load incurred in Voronoi analysis. The computational load incurred in determining the cross sectional area according to the method of the example does not basically depend on the structure of the particle system. Therefore, the method of the example is suitably used in case the structure of the particle system is quite remote from the fcc structure or in case the structure of the particle system varies significantly with time. More specifically, the analyzing method according to the example is suitably used in case the target of analysis behaves like fluid.

To obtain a quantitative and accurate analysis result, it is preferable to determine the cross sectional area using Voronoi analysis. Often, however, there is a requirement to obtain results of analysis by the analyzing device 100 quickly rather than obtaining accurate results, such as when the results are referred to in a qualitative discussion. The analyzing device 100 according to the example addresses such a requirement by providing results of analysis quickly at some cost of exactness.

In further accordance with the method of the example, the cross sectional area is defined to be decreased with an increase in the inter-particle distance. In particular, the cross sectional area is defined such that, when the inter-particle distance exceeds the cut-off distance $r_c$, the cross sectional area is substantially zero. This is an assumption that agrees with the physical knowledge that heat is exchanged less heavily between remote particles. Since interaction with a given particle is limited to those particles within the cut-off distance $r_c$, a hypothesis that restricts heat exchange with a given particle to those particles within the cut-off distance $r_c$ also agrees with the physical knowledge. Thus, it is expected that the results of analysis obtained under the hypothesis that agrees with the physical knowledge involves improved physical consistency.

The temperature calculation unit 110 calculates the temperature of each particle by continuum approximation. Therefore, the temperature of the particle calculated by the temperature calculation unit 110 may differ largely from the dispersion of particle velocity, which is the primary definition of temperature. In order to mitigate or remove such inconsistency, we have arrived at an idea of determining the temperature by the temperature calculation unit 110 and then reflecting the kinetic energy originating from the temperature in the motion of the particle. The velocity of the particle may be forced to be changed to the velocity corresponding to the temperature by, for example, temperature scaling. However, this approach places a constraint on the motion and so is non-physical in nature.

Accordingly, the analyzing device 100 according to the example is configured to correct the term of the force in the motion equation based on the temperature, by assuming that the particle is immersed in a heat bath of a temperature calculated by the temperature calculation unit 110. This can reflect the temperature calculated by the temperature calculation unit 110 in the velocity field of the particles so that the temperature field calculated by the temperature calculation unit 110 can be introduced more naturally. This can consequently provide a model with less physical inconsistency.

We conducted a calculation to certify the method according to the example. Basically, the MD method, which is incorporated in the example, is only capable of handling heat conduction by lattice vibration of particles so that contribution from free electrons is not reflected. Therefore, in case the MD method is used to analyze a metal as a target, i.e., in case material constants (e.g., Debye temperature, Debye frequency, atomic weight, and density, specific heat, heat conductivity in the heat conduction equation) are defined for particles in the particle system so that the particles simulate metal particles, the method according to the example is quite useful.

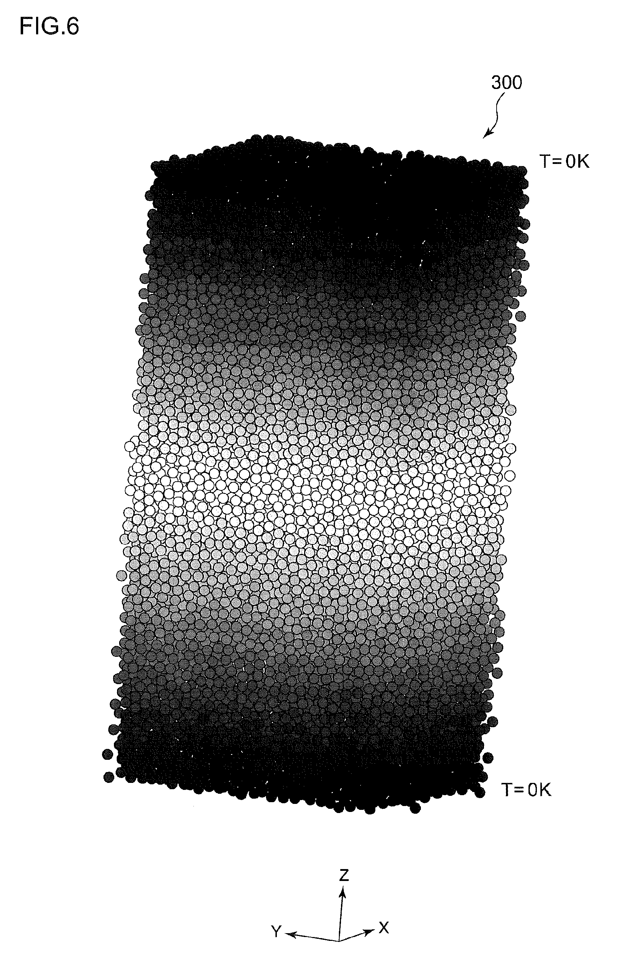

Fig. 6 is a schematic diagram showing a particle system 300 used in non-stationary analysis as calculation to verify the method. The particle system 300 simulates a bar of amorphous metal. In an amorphous metal, contribution from heat conduction from free electrons cannot be generally neglected, and the crystal structure varies fluidically. The temperature at the ends of the bar is fixed to 0(K). The initial temperature distribution is given by the following expression 9.

$$T(r) = 100 \frac{8}{\pi^2} \sin\left\{ \frac{\pi}{L} r \right\} \quad (9)$$

where L denotes the length of the bar, r denotes the distance from the end, and T(r) denotes the temperature at the distance r.

In this case, the theoretical formula of temperature distribution after the elapse of time t is given by expression 10 below.

$$T(r,t) = 100\frac{8}{\pi^2}\exp\left(-\frac{a\pi^2}{L^2}t\right)\sin\left(\frac{\pi}{L}r\right) \qquad (10)$$

where a denotes the thermal diffusion constant, and the relationship given by the following expression 11 holds.

$$a = \frac{K}{\rho C_V} \qquad (11)$$

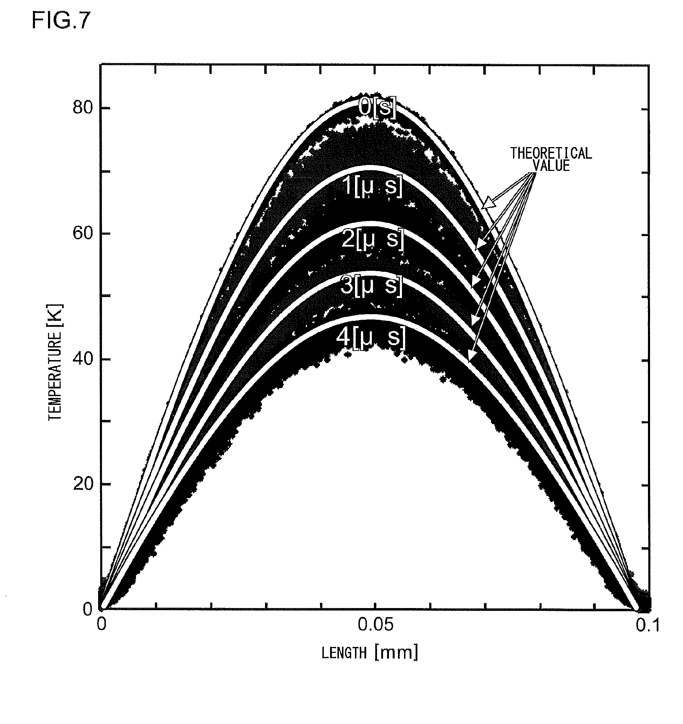

Fig. 7 is a graph showing results of calculation using the method according to the example. According to the method of the example, the calculated value of temperature distribution (denoted by solid dots) agrees well with the theoretical value (denoted by the solid line) after the elapse of 1 ($\mu$s), 2 ($\mu$s), 3 ($\mu$s), and 4 ($\mu$s) since the time evolution of the particle system 300 is started.

The structure and operation of the analyzing device 100 according to the examples are described above. The examples are intended to be illustrative only and it will be obvious to those skilled in the art that various modifications to combinations of constituting elements and processes could be developed and that such modifications are also within the scope of the present invention.

The repeated calculation unit 120 according to the examples are described as calculating both the position and velocity of the particle. However, the description is non-limiting as to the mode of calculation. For example, some numerical analysis methods like the Verlet method directly calculate the position of a particle by referring to the force exerted on the particle and so do not require positively calculating the velocity of the particle. The technical idea according to the examples may also be applied to such methods.

[DESCRIPTION OF THE REFERENCE NUMERALS]

100 analyzing device, 102 input device, 104 display, 108 particle system acquisition unit, 114 particle data storing unit, 118 display control unit, 120 repeated calculation unit

[INDUSTRIAL APPLICABILITY]

According to the examples of the invention, the computational load incurred in analyzing a particle system including a plurality of particles is reduced.

**Claims**

1.   An analyzing method for analyzing a particle system defined in a virtual space, comprising:

   determining a cross sectional area between two particles included in the particle system independently of positions of other particles; and
   updating a state of the particle system by using the determined area.

2.   The analyzing method according to claim 1, wherein the larger a distance between the two particles, the smaller the area determined in the determining.

3.   The analyzing method according to claim 1 or 2, wherein
   the area determined in the determining is a non-linear function of the distance between the two particles.

4.   The analyzing method according to one of claims 1 through 3, wherein
   the updating includes:

   calculating a force exerted on a particle using a potential energy function such that those particles at a distance from the particle less than a predetermined cut-off distance are defined as exerting a force on the particle; and
   updating a state of the particle based on a governing equation that includes the force calculated as being exerted on the particle and that governs motion of particles, wherein
   the area determined in the determining is substantially zero when a distance between the two particles is larger than the cut-off distance.

5. An analyzing device for analyzing a particle system defined in a virtual space, comprising:

an area determination unit that determines an area between two particles included in the particle system independently of positions of other particles; and
a state update unit that updates a state of the particle system using the area determined by the area determination unit.

6. A computer program embedded in a non-transitory computer readable recording medium to implement on a computer a function of analyzing a particle system defined in a virtual system, the program comprising:

a determination module that determines an area between two particles included in the particle system independently of positions of other particles; and
an updating module that updates a state of the particle system by using the determined area.

FIG.1

FIG.2

FIG.3

102

INPUT DEVICE

DISPLAY

104

ANALYZING DEVICE

114

108 — PARTICLE SYSTEM
ACQUISITION UNIT

134 — TEMPERATURE
ASSOCIATION UNIT

PARTICLE DATA
STORING UNIT

REPEATED
CALCULATION UNIT

120 —

110 — TEMPERATURE
CALCULATION UNIT

112 — AREA DETERMINATION
UNIT

116 — HEAT CONDUCTION
CALCULATION UNIT

122 — FORCE CALCULATION
UNIT

130 — INTER-PARTICLE
ACTION
CALCULATION UNIT

132 — HEAT BATH ACTION
CALCULATION UNIT

124 — PARTICLE STATE
CALCULATION UNIT

126 — STATE UPDATE UNIT

128 — TERMINATION
CONDITION
DECIDING UNIT

118 — DISPLAY
CONTROL UNIT

100

FIG.4

| PARTICLE ID | POSITION | VELOCITY | TEMPERATURE |
|---|---|---|---|
| 1 | (10,20,30) | (10,10,0) | 125 |
| 2 | (11,22,32) | (2,3,1) | 130 |
| 3 | (31,42,50) | (5,15,2) | 135 |
| | | | |

114

FIG.5

```
                    ┌─────────────┐
                    │    START    │
                    └─────────────┘
                           │
          ┌────────────────────────────────┐
          │  DETERMINE INITIAL STATE       │ ～S202
          │     OF PARTICLE SYSTEM         │
          └────────────────────────────────┘
                           │
          ┌────────────────────────────────┐
          │  DETERMINE CROSS SECTIONAL     │ ～S204
          │      AREA INDEPENDENTLY OF     │
          │ POSITIONS OF OTHER PARTICLES   │
          └────────────────────────────────┘
                           │
          ┌────────────────────────────────┐
          │    ANALYZE TEMPERATURE         │ ～S206
          │      FIELD USING FVM           │
          └────────────────────────────────┘
                           │
          ┌────────────────────────────────┐
          │  CALCULATE FORCE EXERTED ON    │ ～S208
          │ PARTICLES BASED ON POTENTIAL   │
          │      BETWEEN PARTICLES         │
          └────────────────────────────────┘
                           │
          ┌────────────────────────────────┐
          │     ADD RANDOM FORCE           │ ～S210
          │     AND VISCOUS FORCE          │
          └────────────────────────────────┘
                           │
          ┌────────────────────────────────┐
          │  CALCULATE POSITION AND        │ ～S212
          │ VELOCITY OF PARTICLES BASED ON │
          │  MOTION EQUATION OF PARTICLES  │
          └────────────────────────────────┘
                           │
          ┌────────────────────────────────┐
          │     UPDATE POSITION AND        │ ～S214
          │     VELOCITY OF PARTICLES      │
          └────────────────────────────────┘
                           │
                        S216
                       ◇────────◇
                      ╱ IS TERMINATION ╲  N
                     ◇ CONDITION MET?  ◇───
                      ╲                ╱
                       ◇────────◇
                           │ Y
                    ┌─────────────┐
                    │     END     │
                    └─────────────┘
```

FIG.6

300

T=0K

T=0K

Z

Y ← → X

EP 2 899 656 A1

FIG.7

17

## INTERNATIONAL SEARCH REPORT

| | International application No. |
|---|---|
| | PCT/JP2013/003502 |

**A.  CLASSIFICATION OF SUBJECT MATTER**
*G06F19/00*(2011.01)i

According to International Patent Classification (IPC) or to both national classification and IPC

**B.  FIELDS SEARCHED**

Minimum documentation searched (classification system followed by classification symbols)
G06F19/00

Documentation searched other than minimum documentation to the extent that such documents are included in the fields searched
Jitsuyo Shinan Koho          1922–1996    Jitsuyo Shinan Toroku Koho    1996–2013
Kokai Jitsuyo Shinan Koho    1971–2013    Toroku Jitsuyo Shinan Koho    1994–2013

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| Y | JP 2010-170309 A  (Sumitomo Heavy Industries, Ltd.), 05 August 2010 (05.08.2010), paragraphs [0017] to [0044] (Family: none) | 1-6 |
| Y | JP 2011-175327 A  (Sumitomo Heavy Industries, Ltd.), 08 September 2011 (08.09.2011), paragraphs [0014] to [0063] (Family: none) | 1-6 |
| Y | JP 2010-198399 A  (Fuji Xerox Co., Ltd.), 09 September 2010 (09.09.2010), paragraphs [0103] to [0108] (Family: none) | 1-6 |

☒  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 23 August, 2013 (23.08.13) | 03 September, 2013 (03.09.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2013/003502 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2010-32327 A   (Panasonic Corp.), 12 February 2010 (12.02.2010), paragraph [0079] (Family: none) | 1-6 |
| Y | JP 2012-163398 A   (Sumitomo Heavy Industries, Ltd.), 30 August 2012 (30.08.2012), claim 1 (Family: none) | 4 |
| Y | JP 2010-3169 A   (Fuji Xerox Co., Ltd.), 07 January 2010 (07.01.2010), claim 1 (Family: none) | 4 |
| A | Akira KONO, Kenjiro TAURA, "Dynamic Load Balancing Algorithm for Parallel Particle Method with Centrodial Voronoi Tessellation", IPSJ SIG Notes, 2011 (Heisei 23) Nendo ▲2▼, [CD-ROM], 15 August 2011 (15.08.2011), no.130, (66) | 1-6 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2010170309 A

**Non-patent literature cited in the description**

• **JOHN C. TULLY.** Dynamics of gas-surface interaction: 3D generalized Langevin model applied to fcc and bcc surface. *J. Chem. Phys.,* 1975, 73